# EUROPEAN PATENT SPECIFICATION

(11) **EP 0 573 097 B1**
(45) Date of publication and mention of the grant of the patent: **22.09.1999**
(21) Application number: 93201482.2
(22) Date of filing: 25.05.1993
(51) Int. Cl.: H04B 1/16, H04Q 7/06

(54) **Transmission of data by radio**
Datenübertragung via Funk
Emission de données par radio

(30) Priority: 05.06.1992 GB 9212056
(43) Date of publication of application: 08.12.1993
(73) Proprietor: PHILIPS ELECTRONICS UK LIMITED, Croydon CR9 3QR (GB); Koninklijke Philips Electronics N.V., 5621 BA Eindhoven (NL)
(72) Inventor: Sharpe, Anthony Keith, c/o Philips Telecom-PMR, Cambridge CB4 1DP (GB); McPherson, Andrew David, c/o Philips Telecom-PMR, Cambridge CB4 1DP (GB)
(74) Representative: Moody, Colin James

(56) References cited:
- WO-A-88/08649
- WO-A-90/13213
- 41ST IEEE VEHICULAR TECHNOLOGY CONF. 22 May 1991, ST LOUIS,MO USA pages 339 - 344 , XP260202 CHU ET AL 'FIBER OPTIC MICROCELLULAR RADIO'

## Description

The present invention relates to an information display apparatus which can be updated by means of radio transmissions.

Specification WO88/08649 discloses a paging message receiving apparatus comprising a paging receiver which is carried in a convenient place such as on a trouser or skirt belt. In this position, the pager cannot be viewed conveniently. A viewing device, which may be carried on the wrist or as a pendant around the neck, is operatively coupled to the pager across an air interface by a radio frequency, ultrasonic or an infra-red link. Although the communication across an air interface provides freedom it has the disadvantages the transmission between the pager and viewing device can be blocked and have to be re-synchronised when restored, the transmissions can be affected by ambient noise and other forms of interference such a fluorescent lights and neither the pager nor the viewing device is necessarily in the optimum position for receiving a signal.

An article "Fibre Optic Microcellular Radio" by T S Chu et al, 41st IEEE Vehicular Technology Conference, 19 to 22 May 1991, St Louis, Mo, USA pages 339-344 discloses a microcellular telephone system having a distributed transmission system formed by base stations distributing UHF signals to canister antennas using optical fibres. This document is not concerned with information display apparatus.

Specification WO90/13213 discloses coupling the microcomputer of a dedicated radio pager to a portable computer by way of an electrically conductive, detachable interface connector. Data is processed or manipulated by the microcomputer and/or the portable computer and the result is displayed on a screen of the portable computer. A drawback of an electrically conductive interface connector is that it may affect adversely the rf properties of the radio receiver.

In applications such as electronic notice boards it is frequently required to update the information displayed. The updating can be done by transmissions through landlines from a central station which has the disadvantage that the electronic notice board cannot be readily moved around. Alternatively the user equipment may incorporate a dedicated radio receiver which is hard wired into the electronic notice board and any updating is done by way of a radio transmission. Such an equipment is disclosed in British Patent Specification GB 2 247 332 A. Building a radio receiver into the electronic notice board or other end user equipment has a number of drawbacks in that the positioning of the equipment has to be a compromise between viewability and the best possible reception of radio signals and also any equipment containing a radio receiver has to be submitted for type approval by the Radio Regulatory Authorities. Individual type approval is necessary because, amongst other things, an electrically conductive link between the radio receiver and the end user equipment may affect the r.f. properties of the radio receiver. The consequence of this is that a manufacturer of equipment will be reluctant to have too many models because of the time and cost of obtaining type approval.

An object of the present invention is to convey data messages to a storage device in readiness for subsequent usage without the necessity for the receiving equipment to be type approved each time.

According to the present invention there is provided an information display apparatus as defined in claim 1.

In accordance with the present invention the paging apparatus is a self contained unit which is physically independent of the storage means, which itself may be an integral part of a user device for such as a personal computer, electronic notice board or other information display and/or storage device. By using a visible/non-visible radiation link, the r.f. properties of the paging apparatus are not altered and in consequence it is the only part of the system which requires type approval so that a single type approved paging apparatus can be used with any number of end user equipments without the need to seek separate type approval for each user apparatus.

The paging apparatus may comprise any suitable device for example a tone only pager or a message pager.

The paging apparatus may be mounted in the best position for receiving signals from a central station. The link from the paging apparatus may comprise a light emitting diode in the paging apparatus which is coupled to the storage means by an optical fibre which is terminated by a suitable decoder to convert optical signals into electrical signals suitable for storage.

Alternatively the paging apparatus may be equipped with an infra-red emitter and the storage means has an infra-red receiver. Such an arrangement offers great flexibility in the relative positioning of the paging apparatus and the storage means, especially when incorporated in an end user device.

It is known from Japanese published patent application 59-169237 to provide two-way data transfer between a portable terminal and a data transmitter by means of optical couplings. Both the portable terminal and the data transmitter have a photodetector and a light emitting diode. The portable terminal is received in a recess in the data transmitter, and the data transmitter's photodetector and LED are disposed opposite the portable terminals LED and photodetector respectively. There is no disclosure of relaying data via a radio frequency link and physically separating the data terminal from the data transmitter.

European Patent Specification 0 232 123 discloses a radio pager in which calling address signals together with time signals are stored by the pager in a random access memory. In response to a manual command signal the contents of a memory are read out and supplied to a light emitting device. More particularly in order to print out the stored address signals a photodetector is juxtaposed with the light emitter, the photodetector being connected to the printer. In order to provide the necessary juxtapositioning of the light emitter and photodetector, the printer has a light shield and the pager is inserted into the light shield in order to effect the optical coupling between the light emitter and the photodetector. There is no suggestion in the specification of address and time signals being printed out as they are received.

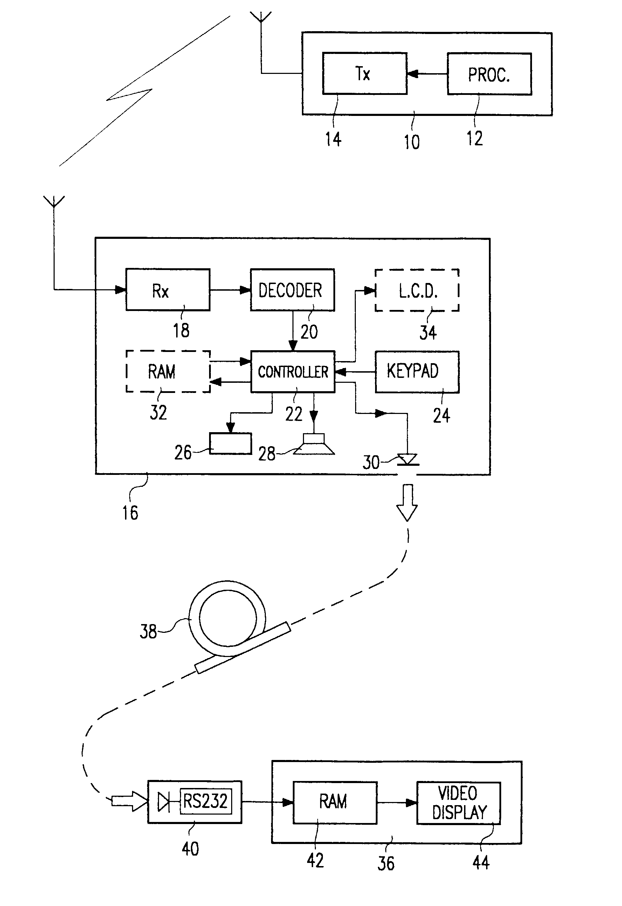

The present invention will now be described, by way of example, with reference to the single figure of the accompanying drawing, which figure is a block schematic diagram of an embodiment of the invention.

The drawing illustrates a digital paging system comprising a base station 10 including a processor 12 for formatting address and message data to be transmitted by a transmitter 14. Any suitable address and message format can be used for example the CCIR Radiopaging Code No. 1, otherwise known as POCSAG (Post Office Code Standardisation Advisory Group). Details of this radiopaging code are given in a book entitled "The book of the CCIR Radiopaging Code No. 1" published by the Radiopaging Code Standards Group (RCSG) in 1986. Appendix 1 discloses the Specification for a standard Code Format for use in Wide Area Radiopaging Systems the details of which will be known by those skilled in the art. However for the sake of completeness the signal format used comprises a batch structure consisting of preamble and a succession of concatenated batches. Each batch consists of a synchronisation codeword plus 8 frames each comprising 2 codewords, making a total of 17 codewords. There are two types of codewords, address codewords and message codewords each comprising 32 bits. In the case of a message codeword 20 bits form a data field. Bits 20 and 21 of an address codeword are function bits and are used to select the format of decoding of concatenated message codewords. Appendix 1, subsection 4.1 states that for the sole transmission of messages in decimal numbers, 4 bits per character are used and the function bits are set to 00. Subsection 4.2 refers to an Alpha-numeric or General Data Format and states that the ISO 7-bit coded character set is used and that the function bits are set to 11. When sending a message, the batch structure is maintained. Thus a message comprises an address codeword and concatenated message codewords plus a synchronisation codeword at the beginning of each batch.

The illustrated system further comprises a pager 16 which may be either a modified tone only pager or numeric or alphanumeric message pager. The pager 16 comprises a radio frequency receiver 18 which is tuned (or tunable) to receive the address and message data transmitted by the base station 10. The receiver 18 is periodically energised to receive the synchronisation codeword in each batch and to be able to receive any address words transmitted in its predetermined frame and any concatenated message codewords.

The receiver 18 has an output connected to a decoding stage 20 which includes means for error detection and correction within the limits possible by the radiopaging code used. The decoding stage 20 checks addresses transmitted in the appropriate frame for data transmitted to the particular pager. If a match is detected between the transmitted data and an internally stored address then the paging receiver 18 remains energised so that the concatenated message data codewords appear at the output of the stage 20, which output is connected to a microcontroller 22. A keypad 24 and alerting devices comprising a vibrator 26, acoustic transducer 28 and light emitting device, such as an LED 30, are connected to the microcontroller 22. The microcontroller 22 is arranged to supply suitably encoded data codewords to the LED 30 substantially contemporaneously with their receipt by the receiver 18, subject to signal processing delays.

If the pager 16 is a message pager then a RAM 32 for storing message data is connected to the controller 22 together with a LCD panel with associated drivers 34. Thus message codewords from the decoding stage 20 are supplied as a stream of, for example, ISO 7-bit characters to the RAM 32 by the controller 22. When a user wishes to display the message data he actuates the keypad 24 to cause the controller 22 to supply the ISO 7 bit characters to the LCD drivers 34 for display on the panel.

A separate user equipment such as an electronic notice board 36 is optically coupled to the LED 30 by a suitably terminated optical fibre 38. The optical fibre 38 is connected to a RS232 converter 40 which includes a light detector and a signal processor for converting received binary coded optical signals into electrical signals. The electronic notice board 36 comprises signal processing means 42, including signal storage means, having an input connected to the converter 40 and a video display unit 44 which comprises a display means and driving circuitry.

In operation the electronic notice board 36 displays data stored in its signal processing means. However if the data is to be updated either on an individual basis or a group basis, then this is done by transmitting a message paging signal from the base station using an individual RIC or a group address RIC.

A pager recognising its RIC remains energised to receive the message codewords which are decoded and relayed to the microcontroller 22 which passes the codewords, if required re-encoded as ISO 7-bit characters, to the LED 30 which is energised in accordance with the binary coding of the message data. The optical version of this data is relayed by way of the optical fibre 38 to the RS232 converter 40 which decodes the signal and arranges it to be stored in the processor 42.

In the case of the pager 16 being a message pager then optionally any message data can be stored in the RAM 32 for subsequent transfer to the LED 30 and onward transmission to the processor 42.

As the pager 16 is not electrically connected to the electronic notice board then one or two type approved pagers can be used with a large variety of notice boards or other equipments. The pager 16 can be positioned for the optimum reception of radio signals and can be separate from other sources of radio interference.

Although in the described embodiment light in the visible part of the spectrum is produced by the LED 30, other emitters, such as infra red emitters, may be used with appropriate detectors.

From reading the present disclosure, other modifications will be apparent to persons skilled in the art. Such modifications may involve other features which are already known in the design, manufacture and use of information transmission systems and devices and component parts thereof and which may be used instead of or in addition to features already described herein.

## Claims

1. An information display apparatus comprising a paging apparatus (16) and a message display device, the paging apparatus (16) comprising a radio frequency receiving means (18) for receiving data message signals transmitted by radio over an air interface, means (20) for identifying data message signals addressed to the receiving means, control means (22) coupled to the receiving means, and a transducer (30) coupled to the control means for emitting a version of a data message, the message display device comprising means (40) for receiving the data message transmitted by the transducer (30), a memory means (42) for storing the received data message, and a video display device (44), the paging apparatus (16) being movable relative to the message display device, characterised in that the transducer (30) is a transducer for emitting modulated visible/non-visible radiation, in that the means (40) for receiving the data message comprises a light sensitive transducer, and in that an optical fibre link (38) is provided to couple the radiation emitting transducer (30) to the light sensitive transducer.

2. Apparatus as claimed in claim 1, wherein the paging apparatus (16) further comprises a storage means (32) coupled to the control means (22) for storing received data message signals and for reading out the stored data message signals to the transducer (30) under the control of the control means.

3. An apparatus as claimed in claim 1 or 2, wherein the message display device comprises an electronic notice board (36) including processing means for processing data stored in said memory means (42).

4. An apparatus as claimed in claim 1, 2 or 3, wherein the paging apparatus (16) comprises a digital wide area pager.

## Patentansprüche

1. Informationswiedergabeanordnung mit einer Paging-Anordnung (16) und einer Nachrichtenwiedergabeanordnung, wobei diese Paging-Anordnung (16) Funkfrequenzempfangsmittel (18) aufweist zum Empfang von Datennachrichtensignalen, die über Funk über eine Luftschnittstelle übertragen werden, Mittel zum Identifizieren an die Empfangsmittel adressierter Datennachrichtensignale, Steuermittel (22), die mit den Empfangsmitteln gekoppelt sind, und einen Wandler (30), der mit den Steuermitteln gekoppelt sind zum Ausstrahlen einer Version einer Datennachricht, wobei die Nachrichtenwiedergabeanordnung Mittel (40) aufweist zum Empfangen der von dem Wandler (30) übertragenen Datennachricht, Speichermittel (42) zum Speichern der empfangenen Datennachricht, und eine Video-Wiedergabeanordnung (44), wobei die Paging-Anordnung (16) gegenüber der Nachrichtenwiedergabeanordnung verlagerbar ist, dadurch gekennzeichnet, dass der Wandler (30) ein Wandler ist zum Ausstrahlen modulierter sichbarer/nicht-sichtbarer Strahlung, dass die Mittel (40) zum Empfangen der datennachricht einen lichtempfindlichen Wandler aufweist, und dass zum Koppeln des strahlungsemittierenden Wandlers (30) mit dem lichtempfindlichen Wandler eine optische Faserverbindung (38) vorgesehen ist.

2. Anordnung nach Anspruch 1, wobei die Paging-Anordnung (16) weiterhin ein Speichermittel (32) aufweist, das mit den Steuermitteln (32) gekoppelt ist zur Speicherung empfangener Datennachrichtensignale und zum Auslesen der gespeicherten Datennachrichtensignale zu dem Wandler (30) unter Ansteuerung der Steuermittel.

3. Anordnung nach Anspruch 1 oder 2, wobei die Nachnchten wiedergabeanordnung eine elektronische Anzeigetafel (36) aufweist einschließlich Verarbeitungsmittel zum Verarbeiten von Daten, die in den genannten Speichermitteln (42) gespeichert sind.

4. Anordnung nach Anspruch 1, 2 oder 3, wobei die Paging-Anordnung (16) einen digitalen Großbereich-Pager aufweist.

## Revendications

1. Appareil de présentation d'informations comprenant un appareil d'appel de personne (16) et un dispositif d'affichage de message, l'appareil d'appel de personne (16) comprenant un moyen de réception radio (18) pour recevoir des signaux de message de données transmis par radio par le biais d'une interface aérienne, un moyen (20) pour identifier des signaux de message de données adressés au moyen de réception, un moyen de commande (22) couplé au moyen de réception, et un transducteur (30) couplé au moyen de commande pour émettre une version d'un message de données, le dispositif d'affichage de message comprenant un moyen (40) pour recevoir le message de données transmis par le transducteur (30), un moyen de mémoire (42) pour stocker le message de données reçu, et un dispositif de présentation vidéo (44), l'appareil d'appel de personne (16) étant mobile par rapport au dispositif d'affichage de message, caractérisé en ce que le transducteur (30) est un transducteur pour émettre un rayonnement visible/non visible modulé, en ce que le moyen (40) pour recevoir le message de données comprend un transducteur sensible à la lumière, et en ce qu'une liaison par fibre optique (38) est fournie pour coupler le transducteur émettant un rayonnement (30) au transducteur sensible à la lumière.

2. Appareil suivant la revendication 1, dans lequel l'appareil d'appel de personne (16) comprend en outre un moyen de stockage (32) couplé au moyen de commande (22) pour stocker des signaux de message de données reçus et pour lire les signaux de message de données stockés au transducteur (30) sous le contrôle du moyen de commande.

3. Appareil suivant la revendication 1 ou 2, dans lequel le dispositif d'affichage de message comprend un panneau d'affichage électronique (36) comprenant un moyen de traitement pour traiter des données stockées dans ledit moyen de mémoire (42).

4. Appareil suivant la revendication 1, 2 ou 3, dans lequel l'appareil d'appel de personne (16) comprend un récepteur d'appel de personne numérique de zone étendue.
